# DEMANDE DE BREVET EUROPEEN

(11) **EP 4 465 490 A1**
(43) Date de publication de la demande: **20.11.2024**
(21) Numéro de dépôt: 24175912.5
(22) Date de dépôt: 15.05.2024
(51) Int. Cl.: H02K 1/20, H02K 1/32, H02K 9/06, H02K 9/08

(54) **MOTEUR FERMÉ AUTO-VENTILÉ À DOUBLE FLUX ET VÉHICULE ASSOCIÉ**

(30) Priorité: 16.05.2023 FR 2304825
(71) Demandeur: ALSTOM Holdings, 93400 Saint-Ouen-sur-Seine (FR)
(72) Inventeur: PERRIAU, Jean-François, 25000 BESANCON (FR); CHARNOZ, Hervé, 25330 SILLEY (FR)
(74) Mandataire: Lavoix

(57) **Abrégé**

L'invention concerne un moteur (10) fermé auto-ventilé comprenant :
- un stator (14),
- un rotor (12),
- un arbre (16) entraîné par le rotor (12),
- un ventilateur (18) solidaire de l'arbre (16) et agencé d'un premier côté du rotor (12) selon la direction principale,
- un premier flasque (20) agencé du premier côté du rotor (12), et
- un deuxième flasque (22) agencé d'un deuxième côté du rotor (12) opposé au premier côté selon la direction principale.

Le ventilateur (18) génère un premier flux (32) orienté vers au moins un premier canal de refroidissement de stator (28) puis l'extérieur du moteur (10), et un deuxième flux (34) orienté vers au moins un deuxième canal de refroidissement de stator (30) puis les canaux de refroidissement de rotor.

L'invention concerne en outre un véhicule associé.

## Description

La présente invention concerne un moteur fermé auto-ventilé comprenant :
- un stator définissant au moins un premier canal de refroidissement de stator et au moins un deuxième canal de refroidissement de stator,
- un rotor définissant des canaux de refroidissement de rotor,
- un arbre entraîné par le rotor autour d'un axe principal s'étendant selon une direction principale,
- un ventilateur solidaire de l'arbre et agencé d'un premier côté du rotor selon la direction principale,
- un premier flasque agencé du premier côté du rotor selon la direction principale, et
- un deuxième flasque agencé d'un deuxième côté du rotor, le deuxième côté étant opposé au premier côté selon la direction principale.

L'invention concerne en outre un véhicule associé.

Le document WO 2012/028183 A1 décrit un moteur fermé auto-ventilé, comprenant une enceinte, dans laquelle sont agencés un rotor, un stator et un ventilateur. Un flux interne circule entre des canaux de refroidissement de stator et des canaux de refroidissement de rotor. En outre, l'enceinte comprend des ouvertures permettant une circulation extérieure.

Cependant, une telle structure nécessite une enceinte extérieure entourant l'ensemble du moteur, ce qui est particulièrement lourd et encombrant.

Un but de l'invention est donc de proposer un moteur fermé auto-ventilé avec une ventilation efficace, avec un bon échange thermique, allégé.

A cet effet, l'invention a pour objet un moteur du type précité, dans lequel le ventilateur génère un premier flux et un deuxième flux, le premier flasque et le deuxième flasque étant tels que le premier flux est orienté vers l'au moins un premier canal de refroidissement de stator puis l'extérieur du moteur et que le deuxième flux est orienté vers l'au moins un deuxième canal de refroidissement de stator puis les canaux de refroidissement de rotor.

Le premier flux permet un refroidissement externe, alors que le deuxième flux permet un refroidissement interne du moteur, sans nécessiter l'ajout d'une enceinte extérieure complète.

Selon d'autres caractéristiques avantageuses mais facultatives de l'invention, prises isolément ou selon toute combinaison techniquement possible :
- chacun de l'au moins un premier canal de refroidissement de stator recevant le premier flux est différent de chacun de l'au moins un deuxième canal de refroidissement de stator recevant le deuxième flux ;
- le ventilateur comprend des éléments de ventilation intérieurs et des éléments de ventilation extérieurs, les éléments de ventilation intérieurs étant agencés entre les éléments de ventilation extérieurs et le stator selon la direction principale, le premier flux étant généré par les éléments de ventilation extérieurs, le deuxième flux étant généré par les éléments de ventilation intérieurs ;
- le ventilateur comprend une paroi centrale, les éléments de ventilation intérieurs étant agencés entre la paroi centrale et le stator selon la direction principale, les éléments de ventilation extérieurs étant agencés du côté opposé de la paroi centrale par rapport aux éléments de ventilation intérieurs selon la direction principale ;
- le premier flasque définit localement des ouvertures entre les éléments de ventilation extérieurs et l'au moins un premier canal de refroidissement de stator ;
- le deuxième flasque présente une forme telle qu'il ne s'étend pas en regard de l'au moins un premier canal de refroidissement de stator, l'au moins un premier canal de refroidissement de stator débouchant à l'extérieur du moteur ;
- le deuxième flasque présente une forme telle que l'au moins un deuxième canal de refroidissement de stator débouche dans un espace interne délimité par le deuxième flasque ;
- le ou chaque deuxième canal de refroidissement de stator débouche, à l'opposé du deuxième flasque, dans un espace interne délimité par le premier flasque et reliant l'au moins un deuxième canal de refroidissement de stator aux canaux de refroidissement de rotor ;
- le premier flasque est relié à l'arbre par un premier roulement, le ventilateur étant fixé à l'arbre entre le rotor et le premier roulement selon la direction principale ; et/ou
- la paroi centrale présente un bord libre, le bord libre étant séparé sur toute sa circonférence du premier flasque par un système de chicanes.

L'invention concerne en outre un véhicule comprenant un moteur de traction, le moteur de traction étant un moteur du type précité.

L'invention sera bien comprise et ses avantages apparaitront davantage à la lumière de la description qui va suivre, donnée uniquement à titre d'exemple non limitatif et faite en référence aux dessins annexés, dans lesquels :
[Fig 1] la figure 1 est une vue en perspective avec une coupe d'un exemple de moteur selon l'invention, et
[Fig 2] la figure 2 est une vue schématique de face du moteur de la figure 1.

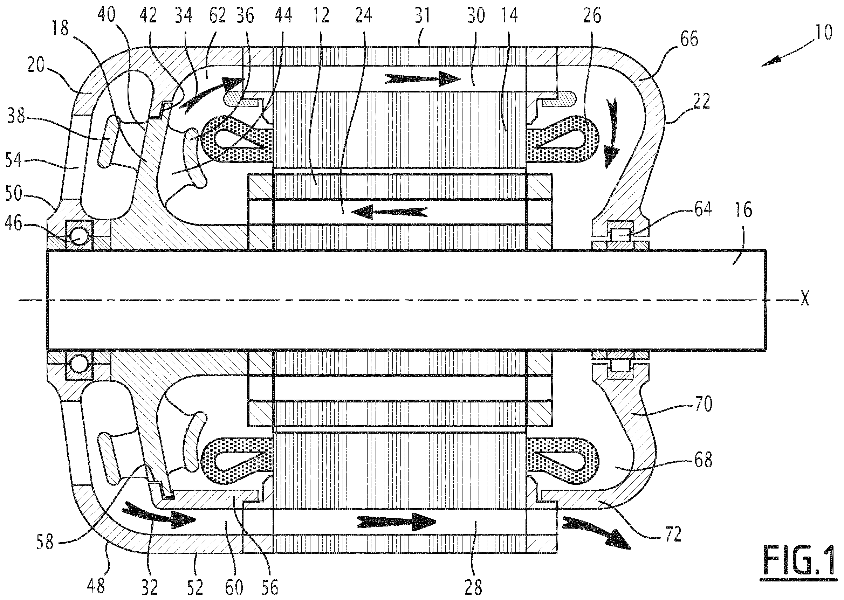

Un exemple de moteur 10 selon l'invention est représenté sur la figure 1.

Le moteur est, par exemple, un moteur à induction.

Le moteur 10 est un moteur fermé auto-ventilé.

Le moteur 10 est, par exemple, un moteur de traction pour la propulsion d'un véhicule.

Le moteur 10 comprend un rotor 12, un stator 14, un arbre 16, un ventilateur 18, un premier flasque 20 et un deuxième flasque 22.

Le rotor 12 est adapté pour entrer en rotation autour d'un axe principal X s'étendant selon une direction principale.

Le rotor 12 définit des canaux de refroidissement de rotor 24.

Chaque canal de refroidissement de rotor 24 traverse le rotor 12, ici selon la direction principale.

Les canaux de refroidissement de rotor 24 sont répartis, ici à intervalle régulier, sur un cercle centré sur l'axe principal X.

Le stator 14 entoure radialement le rotor 12.

Le stator 14 comprend des bobinages 26.

Le stator 14 définit des canaux de refroidissement de stator 28, 30.

Chaque canal de refroidissement de stator 28, 30 traverse le stator 14, ici selon la direction principale.

Les canaux de refroidissement de stator 28, 30 sont répartis, ici à intervalle régulier, sur un cercle centré sur l'axe principal X.

Le stator 14 présente une surface externe 31.

La surface externe 31 définit une surface externe du moteur 10, ici dans une portion centrale du moteur entre le premier flasque 20 et le deuxième flasque 22.

La surface externe 31 est cylindrique.

L'arbre 16 est entraîné par le rotor 12 autour de l'axe principal X.

L'arbre 16 s'étend selon l'axe principal X.

Le ventilateur 18 est solidaire de l'arbre 16.

Le ventilateur 18 est donc adapté pour entrer en rotation avec l'arbre 16, et donc avec le rotor 12.

Le ventilateur 18 est agencé d'un premier côté du rotor 12 selon la direction principale.

Le ventilateur 18 génère un premier flux 32 et un deuxième flux 34.

Le ventilateur 18 comprend ici des éléments de ventilation intérieurs 36 et des éléments de ventilation extérieurs 38.

Le ventilateur 18 comprend en outre une paroi centrale 40.

Les éléments de ventilation intérieurs et extérieurs 36, 38 sont, par exemple, des pales ou des ailettes.

Les éléments de ventilation intérieurs 36 sont agencé entre les éléments de ventilation extérieurs 38 et le stator 14 selon la direction principale.

Le premier flux 32 correspond au flux généré par les éléments de ventilation extérieurs 38, et le deuxième flux 34 correspond au flux généré par les éléments de ventilation intérieurs 36.

Les éléments de ventilation intérieurs 36 permet notamment la mise en place du deuxième flux 34, correspondant à un flux interne, sans nécessiter d'élément additionnel au ventilateur 18, en particulier de redresseur.

Les éléments de ventilation intérieurs et extérieurs 36, 38 sont ici chacun reliés à la paroi centrale 40.

Les éléments de ventilation intérieurs 36 sont agencés entre la paroi centrale 40 et le stator 14 selon la direction principale.

Les éléments de ventilation extérieurs 38 sont agencés du côté opposé de la paroi centrale 40 par rapport aux éléments de ventilation intérieurs 36 selon la direction principale.

La paroi centrale 40 présente un bord libre 42.

Le bord libre 42 s'étend ici sur tout une circonférence.

Le bord libre 42 est ici un cercle.

Le bord libre 42 est la partie de la paroi centrale la plus éloignée de l'arbre 16.

Les éléments de ventilation intérieurs 36 et les éléments de ventilation extérieurs 38 sont respectivement reliés à la paroi centrale 40 par des ailettes 44.

Le premier flasque 20 est agencé du premier côté du rotor 12 selon la direction principale.

Plus particulièrement, ici, le premier flasque 20 est relié à l'arbre 16 par un premier roulement 46, le ventilateur 18 étant fixé à l'arbre 16 entre le rotor 12 et le premier roulement 46 selon la direction principale.

Le premier flasque 20 n'est pas entraîné en rotation par le rotor 12, et est fixe par rapport au stator 14.

Le premier flasque 20 comprend une paroi extérieure 48.

La paroi extérieure 48 délimite la paroi extérieure du moteur 10 au niveau du premier flasque 20.

La paroi extérieure 48 comprend une face 50 et une portion de liaison 52, la portion de liaison 52 reliant la face 50 au stator 14.

La face 50 forme une première extrémité du moteur 10 le long de la direction principale.

La face 50 présente des orifices 54 traversant la face 50.

Le premier flasque 20 comprend en outre une paroi interne 56, ici reliée à une face intérieure de la paroi extérieure 48.

La paroi interne 56 est ici séparée du bord libre 42 de la paroi centrale 40 du ventilateur 18 uniquement par un jeu, compris entre 0,5 et 5 mm.

Plus particulièrement, le jeu entre la paroi interne 56 et la paroi centrale 40 selon la direction parallèle à l'axe principal X, dit jeu axial, est compris entre 1 et 5 mm, plus particulièrement entre 2 et 3 mm.

Le jeu entre la paroi interne 56 et la paroi centrale 40 selon la direction radiale à l'axe principal X, dit jeu radial, est compris entre 0,5 et 1,5 mm, plus particulièrement entre 0,6 et 1,2 mm.

Le bord libre 42 est séparé sur toute sa circonférence du premier flasque, ici de la paroi interne 56, par un système de chicanes 58.

Le système de chicanes 58 comprend au moins un, ici une pluralité de, changements de direction.

Sur l'exemple représenté, le système de chicanes 58 comprend uniquement deux chicanes.

Cependant, le nombre de chicanes est susceptible d'être augmenté, en particulier selon l'étanchéité désirée.

Le premier flasque 20, ici la paroi interne 56, définit localement des ouvertures 60 entre les éléments de ventilation extérieurs 38 et au moins un des canaux de refroidissement de stator 28.

Chaque ouverture 60 relie ici fluidiquement un unique canal respectif parmi les canaux de refroidissement de stator 28 aux éléments de ventilation extérieurs 38.

Pour la suite de la description, on appelle « premier canal de refroidissement de stator » le ou les canaux de refroidissement de stator 28 relié(s) à une des ouvertures 60, et « deuxième canal de refroidissement de stator » le ou les canaux de refroidissement de stator 30 non relié(s) à une des ouvertures 60.

Dans l'exemple représenté, un canal de refroidissement de stator 28 sur deux est relié fluidiquement aux éléments de ventilation extérieurs par une ouverture 60. Plus particulièrement ici, un canal de refroidissement de stator sur deux autour du cercle de l'agencement est alternativement, soit relié aux éléments de refroidissement extérieurs 38 par une ouverture 60, soit non relié à une des ouvertures.

Alternativement, les ouvertures relient les éléments de ventilation extérieurs 38 à deux canaux de refroidissement de stator sur trois.

Plus particulièrement ici, un canal de refroidissement de stator sur deux selon le cercle de l'agencement est alternativement relié aux éléments de refroidissement extérieurs 38 par une ouverture 60 ou non.

Dans l'exemple représenté, en dehors des ouvertures 60, la paroi interne 56 relie la paroi extérieure 48 au bord libre 42 au jeu près, alors qu'au niveau des ouvertures 60, la paroi interne 56 relie le stator 14 au bord libre au jeu près.

En dehors des ouvertures 60, le premier flasque 20 est relié au stator 14 uniquement par la paroi extérieure 48.

Le premier flasque 20 délimite un espace interne 62 reliant les deuxièmes canaux de refroidissement de stator 30 aux canaux de refroidissement de rotor 24.

Les éléments de ventilation intérieurs 36 s'étendent dans l'espace interne 62.

Le deuxième flasque 22 est agencé du deuxième côté du rotor selon la direction principale, le deuxième côté du rotor étant agencé à l'opposé du premier côté.

Plus particulièrement, ici, le deuxième flasque 22 est relié à l'arbre 16 par un deuxième roulement 64.

Le deuxième flasque 22 n'est pas entraîné en rotation par le rotor 12, et est fixe par rapport au stator 14.

Le deuxième flasque 22 comprend une paroi extérieure 66.

La paroi extérieure 66 délimite la paroi extérieure du moteur 10 au niveau du deuxième flasque 22.

La paroi extérieure 66 comprend une face 70 et une portion de liaison 72 reliant la face 70 au stator 14.

La face 70 forme une deuxième extrémité du moteur 10 le long de la direction principale, à l'opposé de la face 50.

Le deuxième flasque 22, ici la paroi extérieure 66, définit un espace interne 68.

L'espace interne 62 délimité par le premier flasque 20, le rotor 12, le stator 14 et l'espace interne 68 délimité par le deuxième flasque 22 forme ici un espace fermé, à l'exception du système de chicanes 58.

Le système de chicanes 58 permet de maintenir une étanchéité satisfaisante de l'espace fermé.

Le deuxième flasque 22 présente une forme telle qu'il ne s'étend pas en regard de l'au moins un premier canal de refroidissement de stator 28.

Le ou chaque premier canal de refroidissement de stator 28 débouche directement à l'extérieur du moteur 10.

Le deuxième flasque 22 présente une forme telle que les deuxièmes canaux de refroidissement de stator 30 débouchent dans l'espace interne 68.

Le deuxième flasque 22 forme un couvercle du moteur 10 fermant l'ensemble du moteur du deuxième côté, à l'exception du ou des premiers canaux de refroidissement de stator 28, ici par exemple de manière hermétique.

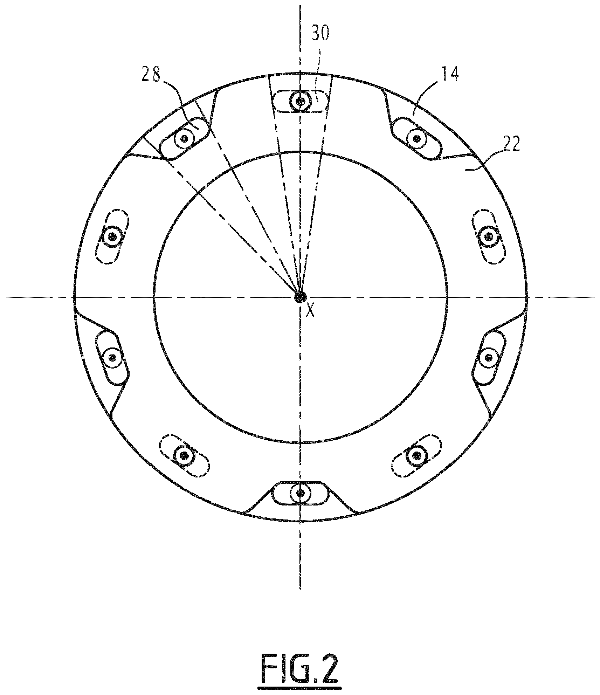

Le deuxième flasque 22, plus particulièrement la paroi extérieure 66, plus particulièrement la portion de liaison 72, est, par exemple, relié au stator 14 dans le prolongement de la surface externe 31, en regard des deuxièmes canaux de refroidissement de stator 30, selon la direction axiale par rapport à l'axe principal X, comme particulièrement visible sur la représentation schématique de la figure 2.

Au niveau de chaque premier canal de refroidissement de stator 28, la paroi extérieure 66, plus particulièrement la portion de liaison 72, est fixée au stator 14 à un emplacement entre ledit premier canal de refroidissement de stator 28 exclus et le rotor 12 selon la direction axiale par rapport à l'axe principal X, comme particulièrement visible sur la représentation schématique de la figure 2. Ici, la paroi extérieure 66, plus particulièrement la portion de liaison 72, est fixée au stator 14 à un épaulement formant un bord dudit premier canal de refroidissement de stator 28, ledit bord étant le bord du canal le plus proche de l'axe principal X.

Le premier flasque 20 et le deuxième flasque 22 sont tels que le premier flux 32 est orienté vers l'au moins un premier canal de refroidissement de stator 28 puis l'extérieur du moteur 10 et que le deuxième flux 34 est orienté vers l'au moins un deuxième canal de refroidissement de stator 30 puis les canaux de refroidissement de rotor 24, ici par l'espace interne délimité par le deuxième flasque 22.

Les premiers canaux de refroidissement de stator 28 recevant le premier flux 32 sont différents des deuxièmes canaux de refroidissement de stator 30 recevant le deuxième flux 34.

Plus particulièrement, ici, un canal de refroidissement de stator 28 sur deux reçoit le premier flux 32, et un canal de refroidissement de stator 30 sur deux reçoit le deuxième flux 34, lesdits différents canaux alternant sur une circonférence autour de l'axe principal X.

En outre, le flux d'air sortant des canaux de refroidissement de rotor 24 est de nouveau envoyé en circulation vers les deuxièmes canaux de refroidissement de stator 30 par le ventilateur 18 dans l'espace interne 62 délimité par le premier flasque 20.

Un tel moteur 10 permet donc une ventilation interne et externe efficace, avec un bon échange thermique, sans nécessiter l'ajout d'une structure complète entourant le moteur.

## Revendications

1. Moteur (10) fermé auto-ventilé comprenant :
- un stator (14) définissant au moins un premier canal de refroidissement de stator (28) et au moins un deuxième canal de refroidissement de stator (30),
- un rotor (12) définissant des canaux de refroidissement de rotor (24),
- un arbre (16) entraîné par le rotor (12) autour d'un axe principal (X) s'étendant selon une direction principale,
- un ventilateur (18) solidaire de l'arbre (16) et agencé d'un premier côté du rotor (12) selon la direction principale,
- un premier flasque (20) agencé du premier côté du rotor (12) selon la direction principale, et
- un deuxième flasque (22) agencé d'un deuxième côté du rotor (12), le deuxième côté étant opposé au premier côté selon la direction principale,
**caractérisé en ce que** le ventilateur (18) génère un premier flux (32) et un deuxième flux (34), le premier flasque (20) et le deuxième flasque (22) étant tels que le premier flux (34) est orienté vers l'au moins un premier canal de refroidissement de stator (28) puis l'extérieur du moteur (10) et que le deuxième flux (34) est orienté vers l'au moins un deuxième canal de refroidissement de stator (30) puis les canaux de refroidissement de rotor (24).

2. Moteur selon la revendication 1, dans lequel chacun de l'au moins un premier canal de refroidissement de stator (28) recevant le premier flux (32) est différent de chacun de l'au moins un deuxième canal de refroidissement de stator (30) recevant le deuxième flux (34).

3. Moteur selon la revendication 1 ou 2, dans lequel le ventilateur (18) comprend des éléments de ventilation intérieurs (36) et des éléments de ventilation extérieurs (38), les éléments de ventilation intérieurs (36) étant agencés entre les éléments de ventilation extérieurs (38) et le stator (14) selon la direction principale, le premier flux (32) étant généré par les éléments de ventilation extérieurs (38), le deuxième flux (34) étant généré par les éléments de ventilation intérieurs (36).

4. Moteur selon la revendication 3, dans lequel le ventilateur (18) comprend une paroi centrale (40), les éléments de ventilation intérieurs (36) étant agencés entre la paroi centrale (40) et le stator (14) selon la direction principale, les éléments de ventilation extérieurs (38) étant agencés du côté opposé de la paroi centrale (40) par rapport aux éléments de ventilation intérieurs (36) selon la direction principale.

5. Moteur selon la revendication 4, dans lequel le premier flasque (20) définit localement des ouvertures (60) entre les éléments de ventilation extérieurs (38) et l'au moins un premier canal de refroidissement de stator (28).

6. Moteur selon la revendication 5, dans lequel le deuxième flasque (22) présente une forme telle qu'il ne s'étend pas en regard de l'au moins un premier canal de refroidissement de stator (28), l'au moins un premier canal de refroidissement de stator (28) débouchant à l'extérieur du moteur (10).

7. Moteur selon la revendication 5 ou 6, dans lequel le deuxième flasque (22) présente une forme telle que l'au moins un deuxième canal de refroidissement de stator (30) débouche dans un espace interne (68) délimité par le deuxième flasque (22).

8. Moteur selon la revendication 7, dans lequel le ou chaque deuxième canal de refroidissement de stator (30) débouche, à l'opposé du deuxième flasque (22), dans un espace interne (62) délimité par le premier flasque (20) et reliant l'au moins un deuxième canal de refroidissement de stator (30) aux canaux de refroidissement de rotor (24).

9. Moteur selon l'une quelconque des revendications 1 à 8, dans lequel le premier flasque (20) est relié à l'arbre (16) par un premier roulement (46), le ventilateur (18) étant fixé à l'arbre (16) entre le rotor (12) et le premier roulement (46) selon la direction principale.

10. Véhicule comprenant un moteur de traction, le moteur de traction étant un moteur (10) selon l'une quelconque des revendications 1 à 9.
